# EUROPÄISCHE PATENTANMELDUNG

(11) **EP 4 647 865 A1**
(43) Veröffentlichungstag der Anmeldung: **12.11.2025**
(21) Anmeldenummer: 25174314.2
(22) Anmeldetag: 05.05.2025
(51) Int. Cl.: G05D 1/644, G05D 1/693, G05D 105/28, G05D 107/70, G05D 109/10

(54) **GRIDBOT**

(30) Priorität: 08.05.2024 DE 102024113019
(71) Anmelder: SSI Schäfer Automation GmbH (DE), 97232 Giebelstadt (DE)
(72) Erfinder: Amon, Benjamin, 8054 Graz (AT)
(74) Vertreter: Witte, Weller & Partner Patentanwälte mbB

(57) **Zusammenfassung**

Es werden offenbart ein FTS (50), das für eine Raster-Navigation eingerichtet ist, sowie ein entsprechendes Transportverfahren. Das FTS weist auf: eine Vielzahl von FTF (10), die mindestens durch erste und zweite Gruppen der FTF (10) gebildet ist; eine Fahrfläche (25), innerhalb der sich die FTF (10) entlang einer Gitterstruktur (24) bewegen, wobei die FTF (10) der ersten Gruppe (54-1) nur entlang eines ersten Basisvektors (V1) bewegt werden dürfen und wobei die FTF (10) der zweiten Gruppe (54-2) nur entlang des zweiten Basisvektors (V2) bewegt werden dürfen, die die Fahrfläche (25) aufspannen; und eine Steuerung (18; 52), die eingerichtet ist, eine Route (28) entlang des Gitters (24) zwischen einem vorgegebenen Startpunkt (30) und einem vorgegebenen Zielpunkt (32) zu planen, so dass ausgewählte der FTF (10) ein Transportgut (28), durch dessen Übergabe zwischen den ausgewählten FTF (10), vom Startpunkt (30) zum Zielpunkt (32) transportieren.

## Beschreibung

Die vorliegende Offenbarung betrifft ein fahrerloses Transportsystem, das eingerichtet ist, eine Raster-Navigation durchzuführen, insbesondere in einem intralogistischen System, wie z.B. in einem Lager- und/oder Kommissioniersystem. Des Weiteren betrifft die vorliegende Offenbarung ein Verfahren zum Transportieren eines Transportguts in einem derartigen System.

Fahrerlose Transportsysteme (FTS), die aus fahrerlosen Transportfahrzeugen (FTF), automatisiert geführten Fahrzeugen (AGV) bzw. autonomen mobilen Robotern (AMR) gebildet werden, sind zunehmend wichtige Komponenten einer modernen Intralogistik und von Produktionsprozessen. Diese Systeme bieten verschiedene technologische Vorteile und tragen zur Effizienzsteigerung bei. Diese Systeme repräsentieren einen wesentlichen Fortschritt in der Automatisierung des Materialflusses.

Ein FTF ist ein automatisiertes Fahrzeug, das Transportgüter, wie z.B. Materialien, Produkte, Lagergüter (inkl. Ladungsträger) oder andere Lasten innerhalb einer Produktionsstätte, eines (Kommissionier-)Lagers oder einer anderen Betriebsstätte ohne menschliches Eingreifen transportiert. Diese Fahrzeuge sind in der Regel mit verschiedenen Technologien wie Sensoren, Navigationssystemen und manchmal auch mit künstlicher Intelligenz ausgestattet, um eine sichere und effiziente Bewegung durch ihre Umgebung zu gewährleisten. FTF sind ein Kernbestandteil moderner automatisierter Intralogistiksysteme, die darauf abzielen, die Effizienz zu steigern und die menschliche Arbeitsbelastung zu reduzieren.

FTF können für einen breiten Bereich von Aufgaben konfiguriert werden, von einfachem Materialtransport bis hin zu komplexeren Aufgaben wie z.B. einem Werkstückhandling oder einer Palettierung. Es werden bereits Lösungen angeboten, die speziell auf die Bedürfnisse der modernen Kommissionierung zugeschnitten sind und die eine Flexibilität bieten, schnell und einfach Routen zu ändern. Moderne FTF nutzen zu diesem Zweck fortschrittliche Technologien wie Echtzeit-Tracking, Navigationstechnologien und Energieeffizienz-Technologien. Die Implementierung von FTF beinhaltet auch eine sorgfältige Planung der Routen.

Des Weiteren gibt es eine Tendenz, dass die FTF die Güter, die sie insbesondere auf ihrer Oberseite transportieren, mittels Trägheit an eine andere Entität, wie z.B. an ein anderes Fahrzeug oder an eine Übergabestation, abgeben. Man spricht in diesem Fall von einer trägheitsbasierten Übergabe des Transportguts. Die trägheitsbasierte Übergabe von Transportgütern ist exemplarisch in dem Dokument DE 10 2021 118 923 A1 beschrieben.

Das Dokument EP 3 180 275 B1 beschreibt eine Flotte von Fahrzeugen, die von einer Leitsteuerung navigiert wird. Die Leitsteuerung ist in diesem Dokument als "Flottenmanager" bezeichnet und eine Fahrauftragsabwicklung wird von einem (separaten) Materialflussrechner (MFR) an den Flottenmanager kommuniziert. Eine Karte einer Fahrebene ist auch in den Fahrzeugen hinterlegt. Außerdem beschreibt die EP 3 180 275 B1 einen herkömmlichen Konfigurationsvorgang sowie die Kommunikation zwischen den Fahrzeugen und dem Flottenmanager und die ausgetauschten Daten.

Das Dokument DE 10 2014 111 394 A1 betrifft gemäß seinem Titel ein Lager- und Kommissioniersystem und Verfahren zum optimierten Ein- und Auslagern von Artikeln. Das Dokument EP 4 254 123 A2 betrifft gemäß seinem Titel ein Verfahren und ein System zum autonomen Steuern von Bewegungen von Behälterhandhabungsfahrzeugen in einem automatisierten Ein- und Auslagersystem.

Das Dokument US 2023 /0 365 335 A1 betrifft gemäß seinem Titel ein automatisiertes Ein- und Auslagersystem mit mehrdirektionalen Fahrzeugen.

Das Dokument DE 10 2021 200 339 A1 betrifft gemäß seinem Titel ein Sortiersystem und ein Verfahren zum Steuern eines Sortiersystems.

Es ist eine Aufgabe der vorliegenden Offenbarung, ein FTS und ein Verfahren zum Transportieren eines Transportguts vorzusehen, die in einem erhöhten Durchsatz (Anzahl von Transporten pro Zeiteinheit) resultieren. Insbesondere sollen eine Planung und Durchführung eines entsprechenden Transportauftrags weniger komplex sein. Stauungen und Kollisionen sollen möglichst vermieden werden.

Diese Aufgabe wird gelöst durch ein fahrerloses Transportsystem, FTS, das eingerichtet ist, eine Rasternavigation durchzuführen, und das aufweist: eine Vielzahl von fahrerlosen Transportfahrzeugen, FTF, die für die Rasternavigation eingerichtet sind, wobei die Vielzahl der FTF mindestens durch erste und zweite Gruppen der FTF gebildet ist; eine Fahrfläche, innerhalb der sich die FTF, vorzugsweise ausschließlich, entlang einer, insbesondere zweidimensionalen, Gitterstruktur bewegen, die, vorzugsweise regelmäßig angeordnete, Gitterpunkte aufweist und die durch erste und zweite Basisvektoren aufgespannt ist, wobei die FTF der ersten Gruppe nur entlang des ersten Basisvektors bewegt werden dürfen und wobei die FTF der zweiten Gruppe nur entlang des zweiten Basisvektors bewegt werden dürfen; und eine Steuerung, die eingerichtet ist, eine, insbesondere zusammenhängende, Route entlang des Gitters zwischen einem vorgegebenen Startpunkt und einem vorgegebenen Zielpunkt zu planen bzw. zu erzeugen, so dass ausgewählte der FTF ein Transportgut - durch dessen Übergabe zwischen den ausgewählten FTF - vom Startpunkt zum Zielpunkt transportieren. Die Route entspricht insbesondere einem Transportauftrag, der eine Vielzahl von FTF-spezifischen Fahraufträgen umfasst. Jeder der FTF-spezifischen Fahraufträgen identifiziert ein spezifisches FTF; ferner können ein oder mehrere Wegstrecken, die dem spezifischen FTF zugeordnet sind, sowie (optional) Übergabezeitpunkte, Übergabe-Geschwindigkeitsverläufe, Stopppunkte, Kreuzungspunkte des Gitters und Ähnliches vom jeweiligen FTF-spezifischen Fahrauftrag umfasst sein.

Eine Planung der möglichen Fahrwege (Routen) der FTF ist in herkömmlichen Systemen äußerst komplex, weil der entsprechende Transport- bzw. Fahrauftrag üblicherweise immer nur von einem einzigen FTF ausgeführt wird, welches kollisionsfrei, und insbesondere so schnell wie möglich und auf einem kürzesten Weg, zu seinem Zielort zu bewegen ist. Die entsprechende Planung erfordert eine Berücksichtigung von vielen FTF gleichzeitig. Durch eine Reduktion auf zwei mögliche Fahrtrichtungen (zum Beispiel vorwärts und rückwärts) und auf einen entsprechenden Geschwindigkeitsvektor lässt sich die Planung vereinfachen. Dennoch lässt sich die Route variabel bestimmen, indem eine Vielzahl von möglichen Wegstrecken entsprechend kombiniert werden können, so dass sich mehrere mögliche Lösungsrouten ergeben, aus denen ausgewählt werden kann. Jede der Wegstrecken ist mit einem anderen der FTF verknüpft, so dass sich insbesondere das Kollisionsproblem verkleinert.

Eine Anzahl möglicher Routen, die eine identische Gesamtlänge, insbesondere mit einer gleichen Anzahl von Übergaben unterwegs, ist stark eingeschränkt. Eine Optimierungsberechnung kann daher wesentlich schneller durchgeführt werden und erfordert weniger Ressourcen.

Da die (Teil-)Strecken, aus denen sich die Gesamtroute zusammensetzt, vorzugsweise linear sind, indem die Fahrzeuge z.B. mittels Schienen mechanisch geführt sind, ist eine Fahrweg des Fahrzeugs für einen Menschen antizipierbar, der sich in einer unmittelbaren Umgebung des Fahrzeugs befindet. Kollisionen können vermieden werden. Anforderungen an die Sicherheit können reduziert werden. Der Mensch kann sich ohne Gefahr in einem Bereich aufhalten, wo - und während - die Fahrzeuge automatisiert betrieben werden.

Die Kreuzungs- bzw. Übergabepunkte der Fahrzeuge können auch als Teilziele angesehen werden, welche durch eine Fahrroute zwar reserviert bzw. allokiert werden, aber nach einer erfolgreichen Passage sofort wieder freigegeben werden können. Somit bleibt der Fahrweg binär und hochtransparent nachvollziehbar. Die Allokation in einem fahrerlosen Transportsystem bezieht sich auf einen Prozess einer Zuweisung und Verwaltung von Transportaufgaben und Ressourcen innerhalb des Systems. Dies kann Entscheidungen darüber umfassen, wie und wann Fahrzeuge eingesetzt werden, um die Transportgüter innerhalb eines Lagers, einer Produktionsstätte oder eines anderen Betriebsbereichs zu transportieren. Der Allokationsprozess berücksichtigt verschiedene Faktoren wie die Verfügbarkeit der Fahrzeuge, die Dringlichkeit der Transportaufgaben (Priorisierung), die effizientesten Routen und die Minimierung von Wartezeiten oder Leerfahrten.

Im Gesamtnetzwerk, das der Transportfläche überlagert ist, können mehrere Routen klar gegeneinander abgrenzt werden und von verschiedenen Fahrzeuggruppen abfahren, die keine Rücksicht aufeinander nehmen müssen. Eine Echtzeitüberprüfung ist z.B. nicht mehr notwendig.

Durch eine Reduktion der Längen der (Teil-)Fahrwege, aus denen sich die Gesamtroute zusammensetzt, kann sich die Planung ebenfalls vereinfachen. Es ist einfacher, viele kurze Strecken als wenige lange Strecken aufeinander abzustimmen.

Die Verwendung von FTF resultiert in einem Verzicht auf fest installierte Förderer, was ebenfalls in einer hohen Planungsfreiheit resultiert.

Das vorliegende Konzept kann im Bereich von High-Density-Storage-Systemen sowie in Sortiersystemen (z.B. in einem FastBot-System) eingesetzt werden. Die Möglichkeiten der Anwendungen sind nahezu unbegrenzt, weil es in den meisten Systemen leistungsverringernde Verkehrsprobleme gibt, insbesondere wenn sehr viele Fahrzeuge innerhalb eines (räumlich beengten) Bereichs gleichzeitig bewegt werden.

Vorzugsweise sind der Startpunkt und der Zielpunkt nur über eine Kombination aus den ersten und zweiten Basisvektoren miteinander verbindbar, und entsprechen insbesondere jeweils einem der Gitterpunkte.

Die Kombination aus den Basisvektoren verdeutlicht, dass das Transportgut nicht einfach entlang einer Geraden zu transportieren ist, sondern um die "Ecke" fahren muss, um vom Startpunkt zum Zielpunkt zu kommen. Anderenfalls wäre die Umsetzung des geplanten Transportweges durch ein einziges FTF wahrscheinlich sinnvoller.

Der Startpunkt und der Zielpunkt entsprechen jeweils einem anderen der Gitterpunkte. Die Routen starten und enden in den Gitterpunkten, was die Planung der Routen wiederum vereinfacht. Am Anfang und am Ende müssen keine Teilstrecken berücksichtigt werden, die nicht durch eines der FTF abgedeckt werden können. Insbesondere kann man die Teilung des Gitters, d.h. die Relativabstände zwischen direkt benachbarten Gitterpunkten, entsprechend fein wählen, um möglichst jeden Punkt im Raum anfahren zu können. In diesem Fall ist jeder Punkt im Raum ein möglicher Startpunkt oder Zielpunkt.

Vorzugsweise ist die Route so durch die Steuerung geplant, dass das Transportgut zwischen den ausgewählten FTF der ersten und zweiten Gruppen transferiert wird, wobei sich die ausgewählten FTF, insbesondere zeitlich synchronisiert, in ausgewählten der Gitterpunkte treffen, die von der Route umfasst sind.

Die Planung berücksichtigt also auch den zeitlichen Aspekt. Die FTF müssen nicht aufeinander warten, um das Transportgut zu übergeben bzw. zu transferieren. Die Fahrtzeit vom Startpunkt zum Zielpunkt verkürzt sich und resultiert deshalb wiederum in einem höheren Durchsatz (des Gesamtsystems).

Indem sich die FTF in den Gitterpunkten treffen, vereinfacht sich die Planung und insbesondere eine Synchronisierung des Übergabeprozesses wiederum, da die Positionen der Gitterpunkte bzw. Kreuzungspunkte der FTF vorab bekannt und nicht variabel sind.

Vorzugsweise erfolgt die Übergabe trägheitsbasiert und die Steuerung ist ferner eingerichtet, die trägheitsbasierte Übergabe zu planen.

Wenn die Übergabe trägheitsbasiert erfolgt, kann auf aktive Antriebe bei der Übergabe verzichtet werden. Die FTF kommen mit weniger Komponenten und weniger Energie aus.

Vorzugsweise weist jedes der FTF ein Lastaufnahmemittel, LAM, mit einem aktiv angetriebenen Förderer auf, wobei die Übergabe des Transportguts besondere aktiv angetrieben erfolgt.

Ein aktiv angetriebener Förderer erleichtert die Planung im Vergleich zur trägheitsbasierten Übergabe, weil entsprechende Geschwindigkeitsanpassungen zum Hervorrufen der Trägheitskräfte nicht benötigt werden. Die aktive Übergabe ist prozesssicherer und zuverlässiger.

Vorzugsweise ist die Gitterstruktur durch Spalten und Reihen aus Wegstrecken zwischen, insbesondere direkt, benachbarten der Gitterpunkte gebildet, wobei die FTF der ersten Gruppe den Reihen zugeordnet sind und die FTF der zweiten Gruppe den Spalten zugeordnet sind.

Den Gruppen sind also eindeutig unterschiedliche Bewegungsrichtungen zugeordnet. Fahrzeuge der gleichen Gruppe können nicht miteinander kollidieren, insbesondere wenn jede der Reihen und jede der Spalten immer nur mit einem der Fahrzeuge besetzt ist.

Dies bedeutet vorzugsweise, dass jede der Reihen und jede der Spalten mit jeweils einem einzigen der FTF versehen ist.

Vorzugsweise ist die Fahrfläche aus zwei Bewegungsebenen gebildet, wobei eine der Bewegungsebenen durch die ersten und zweiten Basisvektoren aufgespannt ist und die andere Bewegungsebenen durch einen dritten Basisvektor sowie einen der beiden anderen Basisvektoren aufgespannt ist; wobei die Vielzahl der FTF eine dritte Gruppe der FTF umfasst, wobei die FTF der dritten Gruppe nur entlang des dritten Basisvektors bewegt werden dürfen; und wobei die Basisvektoren vorzugsweise senkrecht zueinander orientiert sind.

Indem die Fahrzeuge in zwei Bewegungsebenen belegbar sind, lässt sich jeder Punkt im Raum insbesondere auch über die Höhenrichtung erreichen. Dies bedeutet mit anderen Worten, dass das vorliegende Konzept nicht nur in einer zweidimensionalen Ebene, sondern auch im dreidimensionalen Raum implementierbar ist. Dabei ist eine der Gruppen in beiden der Ebenen aktiv, um das Transportgut zwischen den verschiedenen Bewegungsebenen zu transferieren.

Die Aufgabe wird ferner durch ein Verfahren zum Transportieren eines Transportguts auf einer Route in einem FTS gelöst, das eingerichtet ist, eine Raster-Navigation durchzuführen, und das eine Vielzahl von FTF und eine Fahrfläche aufweist, wobei die Vielzahl der FTF mindestens durch erste und zweite Gruppen der FTF gebildet ist, wobei jedes der FTF für die Raster-Navigation eingerichtet ist und innerhalb und entlang einer der Raster-Navigation entsprechenden Gitterstruktur bewegbar ist, die die Fahrfläche definiert und die Gitterpunkte aufweist, wobei die Fahrfläche durch erste und zweite Basisvektoren aufgespannt ist; wobei das Verfahren die Schritte aufweist: Bestimmen der Route entlang des Gitters zwischen einem vorgegebenen Startpunkt und einem vorgegebenen Zielpunkt; und Auswählen von FTF (aus den ersten und zweiten Gruppen, so dass die ausgewählten der FTF ein Transportgut, durch dessen Übergabe zwischen den ausgewählten FTF, vom Startpunkt zum Zielpunkt transportieren; wobei die FTF der ersten Gruppe nur entlang des ersten Basisvektors bewegt werden dürfen und wobei die FTF der zweiten Gruppe nur entlang des zweiten Basisvektors bewegt werden dürfen.

Mit dem Verfahren lassen sich die gleichen Vorteile wie mit dem System erzielen.

Vorzugsweise weist das Verfahren ferner auf: Transportieren des Transportguts entlang der Route, wobei das Transportgut an entsprechenden Gitterpunkten zwischen den ausgewählten FTF übergeben wird.

Vorzugsweise sind dabei der Startpunkt und der Zielpunkt nur über eine Kombination aus den Basisvektoren miteinander verwendbar, und insbesondere entsprechen sie einem der Gitterpunkte.

Vorzugsweise ist die Gitterstruktur durch Spalten und Reihen aus Wegstrecken zwischen benachbarten der Gitterpunkte gebildet, wobei die FTF der ersten Gruppe den Reihen zugeordnet sind und die FTF der zweiten Gruppe den Spalten zugeordnet sind, wobei insbesondere jede der Reihen und jede der Spalten mit jeweils einem einzigen der FTF versehen ist.

Vorzugsweise ist die Fahrfläche aus zwei Bewegungsebenen gebildet, wobei eine der Bewegungsebenen durch die ersten und zweiten Basisvektoren aufgespannt ist und die andere Bewegungsebene durch einen dritten Basisvektor sowie einen der anderen Basisvektoren aufgespannt ist; wobei die Vielzahl der FTF eine dritte Gruppe der FTF umfasst, wobei die FTF der dritten Gruppe nur entlang des dritten Basisrektors bewegt werden dürfen; und wobei die Basisvektoren vorzugsweise senkrecht zueinander orientiert sind.

Vorzugsweise ist die Route so durch die Steuerung bestimmt, dass das Transportgut zwischen den ausgewählten FTF der Gruppen transferiert wird, wobei sich die ausgewählten FTF, insbesondere zeitlich synchronisiert, in ausgewählten der Gitterpunkte treffen, die von der Route umfasst sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen des vorliegenden Konzepts zu verlassen.

Ausführungsbeispiele des Konzepts sind in den Zeichnungen dargestellt und werden in der nachfolgenden Beschreibung näher erläutert. Es zeigen:
- Fig. 1: ein Blockdiagramm eines fahrerlosen Transportfahrzeugs;
- Fig. 2: eine Veranschaulichung einer Raster-Navigation;
- Fig. 3: eine schematische Darstellung einer zweidimensionalen Fahrfläche, in die eine mögliche Route zwischen einem möglichen Startpunkt und einem möglichen Zielpunkt eingezeichnet ist;
- Fig. 4: verschiedene Fahrzeugtypen zum Einsatz in einem fahrerlosen Transportsystem, insbesondere in verschiedenen Bewegungsrichtungen;
- Fig. 5: eine erweiterte Fahrfläche, so dass FTF in zwei Bewegungsebenen belegbar sind, um beliebige Punkte im Raum zu erreichen;
- Fig. 6: ein Flussdiagramm eines Verfahrens zum Erzeugen bzw. Planen einer Route; und
- Fig. 7: ein Blockdiagramm eines fahrerlosen Transportsystems.

Das vorliegende Konzept kommt insbesondere in der Intralogistik zum Einsatz. Der Begriff "Intralogistik" bezieht sich auf die Organisation, Steuerung, Durchführung und Optimierung aller innerbetrieblichen Materialfluss- und Lagerprozesse. Diese Disziplin umfasst die Verwaltung von Warenbewegungen innerhalb der Grenzen eines Unternehmens, einschließlich der Lagerhaltung, des Transports und der Verteilung von Gütern. Intralogistik spielt eine entscheidende Rolle in der Effizienz und Produktivität von Produktions- und

Lagerbetrieben, indem sie moderne Technologien und Systeme wie automatisierte Fördersysteme, Roboter, Software zur Lagerverwaltung und fortschrittliche Informationstechnologien integriert. Zu den Hauptzielen der Intralogistik gehört es, Warenströme innerhalb des Unternehmens zu optimieren, um Lieferzeiten zu verkürzen, Kosten zu senken, eine Raumausnutzung zu verbessern und/oder die Produktivität zu steigern.

Durch den Einsatz von Intralogistiksystemen kann das Unternehmen nicht nur seine internen Abläufe effizienter gestalten, sondern auch eine Grundlage für eine nahtlose Verknüpfung mit globalen Lieferketten schaffen.

Der Begriff "Materialfluss" bezeichnet die Bewegung von Gütern (z.B. Rohmaterialien, Bauteilen, Zwischenprodukten und Fertigprodukten, aber auch Lager- und Transportgütern) innerhalb, durch oder aus einem Produktions- und/oder Lagerbereich. Er umfasst alle Prozesse, die mit der physischen Bewegung der Güter zusammenhängen, einschließlich Transport, Lagerung, Kommissionierung und Auslieferung.

Der Materialfluss ist ein Kernbestandteil sowohl der Intralogistik als auch der Logistik im Allgemeinen. Er zielt darauf ab, die Effizienz bei der Herstellung und Verteilung der Güter zu optimieren und diese zur richtigen Zeit am richtigen Ort verfügbar zu machen. Ein effektives Materialflussmanagement sorgt für eine Minimierung von Stillstandzeiten, eine Verringerung von Lagerbeständen und eine Beschleunigung einer gesamten Lieferkette. Optimierungen im Materialfluss können durch Automatisierung, verbesserte Layouts der Betriebsstätten und den Einsatz fortschrittlicher Planungs- und Steuerungssysteme erreicht werden.

Deshalb werden hier FTF 10 eingesetzt, die entlang einer (virtuellen oder realen) Gitterstruktur 24 bewegt und navigiert werden, was auch als Grid-Navigation oder Raster-Navigation bezeichnet wird und eine hohe Flexibilität in dynamischen Umgebungen ermöglicht.

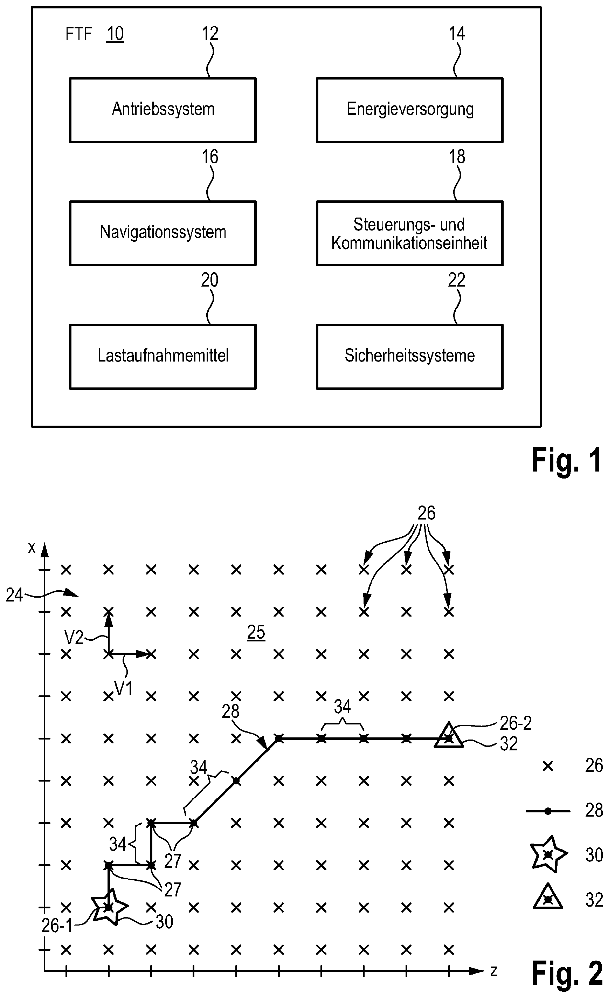

Fig. 1 zeigt ein Blockdiagramm eines FTF 10. Das FTF 10 kann mehrere Komponenten aufweisen, die es ihm ermöglichen, autonom in einer Umgebung, wie z.B. in einer Fahrfläche 25 (vgl. Fig. 2) zu navigieren und (Transport-)Aufgaben zu erfüllen. Die Komponenten können umfassen: ein Antriebssystem 12; eine Energieversorgung 14; ein Navigationssystem 16; eine Steuerungs- und Kommunikationseinheit 18; ein Lastaufnahmemittel (LAM) 20, wie; und/oder ein Sicherheitssystem 22.

Das Antriebssystem 12 kann einen oder mehrere Motoren und eine zugehörige Steuerungstechnik umfassen, die dem FTF 10 eine Beweglichkeit verleihen. Die Beweglichkeit kann durch verschiedene Arten von Antrieben wie Räder oder Ketten realisiert werden. Die Energieversorgung 14 wird oft durch Batterien oder Brennstoffzellen bereitgestellt, um den Antrieb und andere Funktionen des FTF 10 mit Energie zu versorgen. Das Navigationssystem 16 kann Sensoren wie z.B. LIDAR, Kameras oder Ultraschallsensoren sowie auch GPS umfassen. Die Steuerungs- und Kommunikationseinheit 18 kann einen oder mehrere Computer oder Prozessoren umfassen, die Daten von den Sensoren empfangen und interpretieren, die die Bewegungen des Fahrzeugs steuern und die mit anderen Systemen oder einer zentralen Steuerung (FTS-Flottenmanager, Lagerverwaltungsrechner, Materialflussrechner, etc.) kommunizieren. Diese Einheit 18 ist das "Gehirn" des FTF 10 und kann auch entsprechende (Daten-)Schnittstellen zum Senden und Empfangen entsprechender Daten umfassen. Das LAM 20 kann eine Plattform sein, die oben auf einem Fahrwerk sitzt, wie es z.B. in der DE 10 2019 122 052 B4 beschrieben ist, auf die hinsichtlich der Plattform und des Fahrwerks sowie deren Aufbau und Funktionsweise hier Bezug genommen wird. Zum Sicherheitssystem 22 können Not-Aus-Schalter, Stoßfänger, Sicherheitslichtschranken und/oder andere Vorrichtungen gehören, die sicherstellen, dass das FTF 10 sicher in der Nähe von Menschen und anderen Objekten operieren kann.

Die FTF 10 des vorliegenden Konzepts beherrschen verschiedene Navigationsmethoden, um sich in ihrer Umgebung zurechtzufinden und ihre Ziele zu erreichen. Die Wahl der Navigationsmethode hängt oft von der spezifischen Anwendung und den Umgebungsbedingungen ab. Nachfolgend werden einige der gängigsten Navigationsmethoden für die FTF 10 genannt: i.) induktive Navigation, wobei die FTF 10 einem im Boden eingelassenen Draht folgen, der ein elektromagnetisches Feld erzeugt, und mit Sensoren ausgestattet sind, die dieses Feld erkennen und dem Verlauf des Drahtes folgen; ii.) optische Navigation, wobei am Boden angebrachte Markierungen oder Bänder verwendet werden, die von den FTF 10 optisch erfasst werden, und wobei die Fahrzeuge Kameras oder andere optische Sensoren verwenden, um diese Markierungen zu erkennen und einer vorgegebenen Route zu folgen; iii.) Laser-Navigation, wobei die FTF 10 Laser-Abstandsmesser (z.B. LIDAR) verwenden, um ihre Position relativ zu festen Referenzpunkten (z.B. Regalen, Wänden, Arbeitsstationen, etc.) in ihrer Umgebung zu bestimmen, was z.B. durch ein Scannen von Reflektoren oder anderen markanten Merkmalen in der Umgebung erfolgen kann; iv.) SLAM (Simultaneous Localization and Mapping), wobei es den FTF 10 ermöglicht wird, ihre Umgebung zu kartieren und gleichzeitig ihre Position innerhalb dieser Karte zu bestimmen, und wobei SLAM eine Kombination aus Sensoren und komplexen Algorithmen benutzt, um eine dynamische Karte der Umgebung zu erstellen und das Fahrzeug entsprechend zu navigieren; v.) und/oder GPS-Navigation.

Wie in Fig. 2 veranschaulicht, wird allgemein bei der Raster-Navigation, die beim vorliegenden Konzept verwendet wird, eine virtuelle Karte oder eine Gitterstruktur (nachfolgend auch kurz als "Gitter" bezeichnet) 24 über eine Fahrfläche 25 (z.B. eine freie Fläche in einem Lager) gelegt, wobei jeder Punkt 26 im Gitter 24 als ein potenzieller Wegpunkt 27 für das (nicht gezeigte) Fahrzeug 10 dienen kann. Der Wegpunkt 27 kann ein Startpunkt 30, ein Zielpunkt 32 und/oder ein Kreuzungs- bzw. Übergabepunkt sein. Die FTF 10 navigieren entlang und durch dieses Gitter 24 anhand von Algorithmen, die einen, vorzugsweise kürzesten oder effizientesten, Gesamtweg bzw. Route 28 zu einem Zielpunkt 32 bestimmen, insbesondere basierend auf Echtzeitdaten über die Umgebung und mögliche Hindernisse. Vorteile der Raster-Navigation sind: Flexibilität, Skalierbarkeit und Kollisionsvermeidung. Da keine physischen Leitlinien wie Drähte oder Bänder benötigt werden, kann die Route 28 leicht geändert und an neue Layouts der Fahrfläche 25 oder Aufgaben angepasst werden. Die Fahrfläche 25 kann leicht erweitert werden, indem weitere Bereiche in das bestehende Gitter 24 integriert werden, ohne dass umfangreiche physische Änderungen erforderlich sind. Moderne Algorithmen ermöglichen es den FTF 10, ihre Wege 28 dynamisch anzupassen, um z.B. Kollisionen mit anderen FTF 10 oder Hindernissen zu vermeiden. Die Technologie hinter der Raster-Navigation umfasst in der Regel fortgeschrittene Sensoren und Software, die kontinuierlich Daten über die Umgebung sammeln und verarbeiten. Die Datensammlung kann LIDAR, Kameras oder andere Formen der Sensorik einschließen, die zusammenarbeiten, um eine genaue Positions- und Bewegungserkennung zu gewährleisten.

Um Kollisionen zwischen den FTF 10 bei der Raster-Navigation zu vermeiden, werden herkömmlicherweise mehrere Strategien und Technologien eingesetzt. Diese Maßnahmen sind darauf ausgelegt, eine sichere, effiziente und kollisionsfreie Bewegung der FTF 10 innerhalb des Gitters 24 zu gewährleisten. Diese Strategien und Technologien können umfassen: a) Kollisionsvermeidungs-Algorithmen; b) Echtzeit-Kommunikation und Koordination; c) Sensorik zur Hinderniserkennung; d) ein Zonenmanagement zur Verkehrskontrolle; und/oder e) Priorisierungsregeln. Kollisionsvermeidungs-Algorithmen sind ausgeklügelte Algorithmen zur Kollisionsvermeidung, die dynamisch die Bewegungen der FTF 10 planen und steuern. Diese Algorithmen können beispielsweise einen Dijkstra-Algorithmus oder andere Routenfindungsverfahren verwenden, um sichere Wege 28 durch das Gitter 24 zu berechnen, die Kollisionen vermeiden. Ferner können die FTF 10 mit Kommunikationssystemen ausgestattet sein, die eingerichtet sind, ihre Positionen und geplanten Routen 26 in Echtzeit mit anderen FTF 10 und/oder einer zentralen Steuerung (FTF-Flottenmanager) zu teilen. Durch diese Vernetzung können die FTF 10 ihre Routen 28 an die Bewegungen anderer FTF 10 anpassen. In komplexeren Systemen kann die Bewegung der FTF 10 auch durch ein Zonenmanagement geregelt werden, bei dem bestimmte Bereiche des Gitters 24 zeitweise für andere FTF 10 gesperrt und/oder reserviert werden, um eine Überlastung oder Kollisionen zu vermeiden. Diese Art der Verkehrskontrolle kann durch die zentrale Steuerungssoftware (FTS-Flottenmanager) verwaltet werden. Auch werden häufig Priorisierungsregeln festgelegt, die bestimmen, welches der FTF 10 einen Vorrang hat, wenn z.B. zwei oder mehr FTF 10 im Gitter 24 aufeinandertreffen. Solche Regeln können auf verschiedenen Faktoren basieren, wie der Dringlichkeit einer Aufgabe, einer Länge der zurückgelegten oder verbleibenden Strecke, oder spezifischen Verkehrsregeln innerhalb der Fahrfläche 25. Durch eine Kombination dieser Techniken können die FTF 10 effizient und sicher in dem Gitter 24 navigieren, wobei der Materialfluss optimiert wird.

Fig. 2 veranschaulicht schematisch die Raster-Navigation. Diese Darstellung zeigt beispielhaft ein regelmäßiges Gitter 24, in dem jeder Gitterpunkt 26 einen möglichen Startpunkt 30, einen möglichen Zielpunkt 32 und/oder einen möglichen Kreuzungspunkt, wo eine Transportgut-Übergabe stattfinden kann, innerhalb einer Fahrfläche 25 darstellt. Die durchgezogene Linie zeigt eine von vielen möglichen Route 28 eines FTF 10 (nicht dargestellt) durch das Gitter 24. Der linke Punkt 26-1 in Fig. 2 markiert den Startpunkt 30 und der rechte Punkt 26-2 den Zielpunkt 32. Die Route 28 der Fig. 2 setzt sich exemplarisch aus zehn Wegstrecken 34 zusammen. Die Wegstrecken 34 verbinden direkt benachbarte Gitterpunkte 26 miteinander. In der Fig. 2 sind exemplarisch horizontale, vertikale und diagonale Wegstrecken 34 gezeigt. Es ist aber auch möglich, nur horizontale und vertikale Wegstrecken 34 zu betrachten, wie es nachfolgend noch erfolgen wird.

Die Gitterstruktur 24 der Fig. 2 wird z.B. durch zwei Basisvektoren V1 und V2 aufgespannt, die vorzugsweise senkrecht zueinander orientiert sind. Die hier gezeigten Basisvektoren V1 und V2 stellen mathematische Einheitsvektoren dar, die die Fahrfläche 25 aufspannen. Die Basisvektoren V1 und V2 sind in Fig. 2 gleich lang, könnten aber auch unterschiedlich lang sein. Der Basisvektor V1 erstreckt sich im Beispiel der Fig. 2 parallel zur (Längs-) Richtung Z eines (nicht gezeigten) Lager- und Kommissioniersystems, während sich der Basisvektor V2 parallel zur (Quer-) Richtung X erstreckt. Die Vektoren V1 und V2 sind vorzugsweise gleich lang. Es versteht sich, dass die Fahrfläche 25 aber auch durch mehr als zwei Basisvektoren Vi aufgespannt werden könnte. Auch ist es möglich, dass vereinzelte der (eigentlich vorhandenen) Gitterpunkte 27 weggelassen sind, z.B. weil an einem entsprechenden Ort in der Realität ein Hindernis vorhanden ist oder weil dort eine verbotene Zone (z.B. ein Arbeitsbereich von Menschen) definiert ist, in welche die Fahrzeuge z.B. aus Sicherheitsgründen nicht eindringen dürfen. "Direkt" benachbarte Gitterpunkte 27 können also auch um die Länge eines Vielfachen von einem der Basisvektoren voneinander entfernt sein.

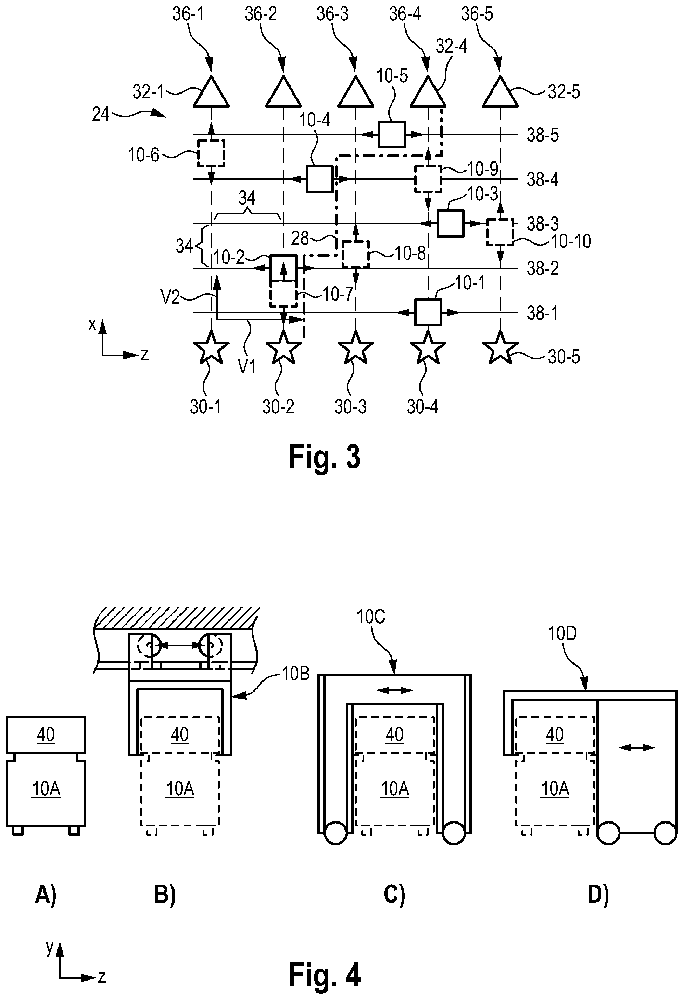

Ferner versteht es sich auch, dass es sich bei den Gitterpunkten 26 des Gitters 24 nicht zwingend um Kreuzungspunkte handeln muss. Die Gitterpunkte 26 können auch ein jeweiliges Ende einer "Sackgassen" bilden, wie es nachfolgend in Fig. 3 für die Start- und Zielpunkte 30 und 32 veranschaulicht ist. Die Start- und Zielpunkte 30 und 32 können aber auch Kreuzungspunkte des Gitters 24 sein.

Fig. 3 veranschaulicht eine weitere (zweidimensionale) Fahrfläche 25, die durch eine (zweidimensionale) Gitterstruktur 24 definiert ist. Die (regelmäßige) Gitterstruktur 24 wird ebenfalls durch Gitterpunkte 26 gebildet. Die Gitterstruktur 24 der Fig. 3 entspricht im Wesentlichen der Gitterstruktur 24 der Fig. 2. Die Wegstrecken 34, die in der Fig. 3 vertikal orientiert (Längsrichtung X) und miteinander verbunden sind, definieren durch Strichlinien dargestellte Spalten 36 des Gitters 24. Die Wegstrecken 34, die in der Fig. 3 horizontal orientiert (Querrichtung Z) und miteinander verbunden sind, definieren durch durchgezogene Linien dargestellte Reihen 38 des Gitters 24. Exemplarisch sind fünf Spalten 36-1 bis 36-5 und fünf Reihen 38-1 bis 38-5 in Fig. 3 gezeigt. Es versteht sich, dass allgemein wenigstens eine Spalte 36 und mehrere Reihen 38 oder alternativ mehrere Spalten 26 und wenigstens eine Reihe 38 vorgesehen wird. Des Weiteren sind exemplarisch fünf Startpunkte 30-1 bis 30-5 sowie fünf Zielpunkte 32-1 bis 32-5 gezeigt, die keine Kreuzungspunkte sein müssen und zum Beispiel am Ende einer Sackgasse liegen können. Die Punkte 30 und 32 können auch in der Mitte der Fahrfläche 25 der Fig. 3 oder an eigenen der seitlichen linken und rechten Ränder liegen. Es versteht sich, dass das Gitter 24 der Fig. 3 mehr oder weniger Spalten 36 sowie mehr oder weniger Reihen 38 aufweisen könnte.

Das Gitter 24 der Fig. 3 zeichnet sich vorzugsweise dadurch aus, dass jeweils ein FTF 10 für jede der Spalten 36 und für jede der Reihen 38 vorgesehen ist. Dies bedeutet mit anderen Worten, dass in jeder der Spalten 36 und in jeder der Reihen 38 jeweils ein FTF 10 vorgesehen ist. Es versteht sich, dass mehr als ein FTF 10 pro Spalte 36 und pro Reihe 38 vorgesehen sein kann. Es wird jedoch vorausgesetzt, dass sich die FTF 10 nur entlang der ihnen zugewiesenen Richtung (X bzw. Z) bewegen können. Dies bedeutet mit anderen Worten, dass sich die FTF 10 vorzugsweise nur in der X-Richtung oder in der Z-Richtung bewegen bzw. bewegen dürfen, so dass die FTF 10 in diesem Fall nur geradeaus (vor und zurück) fahren, aber nicht abbiegen, sollen. In der Fig. 3 bewegen sich die FTF 10-1 bis 10-5 also nur horizontal bzw. quer in der Richtung Z entlang der ihnen jeweils zugewiesenen Reihen 38, wohingegen sich die FTF 10-6 bis 10-10 nur vertikal bzw. längs in der Richtung X entlang der ihnen jeweils zugewiesenen Spalten 36 bewegen (dürfen).

Des Weiteren ist in der Fig. 3 eine exemplarische Route 28 durch eine strichpunktierte Linie veranschaulicht, die sich von dem Startpunkt 30-2 zum Zielpunkt 32-4 erstreckt. Die Route 28 der Fig. 3 ist derart, dass für ihre Implementierung die Fahrzeuge 10-7, 10-2, 10-8, 10-4 und 10-9 benutzt werden, insbesondere in der angegebenen Reihenfolge. Das Fahrzeug 10-7 holt ein (nicht dargestelltes) Transportgut 40 von dem Startpunkt 30-2 ab und übergibt das Transportgut 40 dann an das Fahrzeug 10-2, wie es in Fig. 3 veranschaulicht ist, indem die Fahrzeuge 10-7 und 10-2 einander direkt gegenüber positioniert sind. Die Bewegungen der Fahrzeuge 10-7 und 10-2 sind so aufeinander abgestimmt (synchronisiert), dass sich die Fahrzeuge 10-7 und 10-2 an einem vorherbestimmten Ort (Kreuzungspunkt) zu einer vorherbestimmten Zeit mit vorherbestimmten Geschwindigkeiten treffen. Im Beispiel der Fig. 3 wartet das Fahrzeug 10-2 bereits am entsprechenden Gitterpunkt auf das Fahrzeug 10-7, das sich wiederum mit einem vorab bestimmten Bewegungsablauf dem Fahrzeug 10-2 nähert und dort gezielt zum Stillstand kommt. Das Fahrzeug 10-2 gibt so das Transportgut 40 an das Fahrzeug 10-8 ab, das das Transportgut 40 an das Fahrzeug 10-4 übergibt, um das Transportgut 40 final an das Fahrzeug 10-9 zu übergeben, das wiederum das Transportgut 40 an den Zielpunkt 32-4 liefert.

In der Fig. 3 ist stillschweigend davon ausgegangen worden, dass die Fahrzeuge 10 sich bidirektional, d.h. vorwärts und rückwärts, bewegen können. Es ist aber auch möglich, die Fahrzeuge 10 nur in einer einzigen Richtung zu bewegen. Die Spalten 26 und die Reihen 38 könnten in Form von in sich geschlossenen Schleifen implementiert sein, entlang denen die Fahrzeuge 10 endlos zirkulieren. Allgemein könnte(n) jede - oder mehrere - der Wegstrecken 34 in Form einer jeweiligen Schleife implementiert sein.

Die Übergabe kann aktiv oder passiv erfolgen. Im Falle einer aktiven Übergabe sind die LAM 20 der kooperierenden Fahrzeuge 10 mit Antrieben ausgestattet, um das Transportgut 40 aktiv während der Übergabe zu bewegen. Das LAM 20 kann z.B. durch einen Rollenförderer oder Bandförderer implementiert sein, auf dessen Oberseite das Transportgut platziert ist und, vorzugsweise, linear bewegt werden kann. Alternativ kann auch ein sogenannter Matrixförderer eingesetzt werden, der das auf ihm platzierte Transportgut in verschiedene Richtungen bewegen - und damit abgeben - kann. Ein derartiger Matrixförderer ist z.B. im Dokument DE 10 2010 015 584 A1 beschrieben ist. Im Falle einer passiven Übergabe ist es nicht zwingend erforderlich, dass die LAM 20 der kooperierenden Fahrzeuge 10 (jeweils) mit einem (eigenen) Antrieb versehen sind, um das Transportgut 40 während der Übergabe zu bewegen. In diesem Fall kann das LAM 20 einfach eine Plattform sein, auf der das Transportgut platziert wird. Eine Oberfläche der Plattform kann einen geeigneten Reibungskoeffizienten aufweisen, um eine trägheitsbasierte Übergabe zu unterstützen.

Nachfolgend wird eine passive, trägheitsbasierte Übergabe eines Transportguts 40 von einem ersten FTF 10 auf ein zweites FTF 10 beschrieben. Die trägheitsbasierte Übergabe bezieht sich in diesem Beispiel auf eine Methode, bei der die physikalische Trägheit des Transportgutes 40 genutzt wird, um es von dem ersten FTF 10 auf das LAM 20 des zweiten FTF 10 oder in einen anderen Bereich (z.B. auf eine stationäre Transferstation) zu transferieren, insbesondere ohne mechanische Hilfsmittel wie z.B. Förderbänder oder Roboterarme zu verwenden.

Der Transfer könnte zum Beispiel so aussehen. Das erste FTF 10 beschleunigt oder verlangsamt, so dass das darauf befindliche Transportgut 40 durch die, durch die Geschwindigkeitsanpassung hervorgerufene, Trägheitskraft in eine bestimmte Position auf dem LAM 20 gebracht wird. Die Transportplattform des LAM 20 kann z.B. in ihrer Umfangsrichtung zumindest teilweise mit einer zaunartigen Halterung versehen sein, die vertikal aus der Transportplattform herausragt, um das Transportgut 40 während einer Fahrt des FTF 10 auf der Plattform halten oder auch freigeben zu können, wie es z.B. in dem Dokument DE 10 2019 122 052 B4 beschrieben ist. Die FTF 10 können eingerichtet sein, an einem bestimmten (Gitter-)Punkt abrupt gestoppt zu werden, wodurch sich das Transportgut 40 aufgrund seiner Trägheit in der ursprünglichen Bewegungsrichtung weiterbewegt und so auf eine andere Plattform oder in einen anderen Bereich befördert wird, d.h. unter Nutzung von Schwerkraft und/oder Bewegung.

Beim Erreichen seines Zielorts, d.h. am Übergabeort, könnte das erste FTF 10 so sanft gebremst werden, dass das Transportgut 28 aufgrund der Trägheit von der Plattform des LAM 20 des ersten FTF 10 auf die Plattform des LAM 20 des zweiten FTF 10 rutscht bzw. gleitet oder auf die Plattform einer Aufnahmestation (nicht gezeigt) rutscht bzw. gleitet. Diese Methode minimiert den mechanischen Verschleiß, weil die ersten und zweiten FTF 10 und 10 nicht mechanisch miteinander kollidieren, und es macht den Übergabeprozess effizienter und schneller.

Die Art und Weise, wie der Transfer erfolgt, hängt von einem gewählten Fahrzeugtyp ab. In Fig. 4 sind mehrere verschiedene Fahrzeugtypen für die FTF 10 exemplarisch veranschaulicht. Fig. 4A zeigt einen FTF-Typ 10A, bei dem das FTF 10 (hier in der Längsrichtung X) zwangsgeführt bewegt wird, wobei die Zwangsführung virtuell (zum Beispiel optisch oder induktiv) oder auch mechanisch (zum Beispiel mittels Schienen, die nicht dargestellt sind) erfolgen kann. Fig. 4B zeigt einen FTF-Typ 10B, bei dem das FTF 10 (hier in der Querrichtung Z) mechanisch mittels einer Schiene zwangsgeführt wird. Fig. 4C zeigt einen FTF-Typ 10C, bei dem das FTF 10 Portal-artig ausgebildet ist, um den FTF-Typ 10A während eines Austauschs eines Transportguts z.B. zu überfahren, so dass das Transportgut 40 abgehoben oder abgesenkt werden kann. Fig. 4D zeigt einen FTF-Typ 10D mit einem Kragarm, der seitlich über das entsprechende Fahrzeug vorsteht, um das Transportgut 40 vertikal in der Höhenrichtung Y auszutauschen. Den Fig. 4B bis 4D ist gemein, dass der Austausch des Transportguts 40 exemplarisch mit dem FTF-Typ 10A erfolgt, dessen Fahrzeug vorzugsweise in die Fahrzeuge der Typen 10B bis 10D (in der Längsrichtung X) einfährt, nachdem diese Fahrzeuge vorab entsprechend positioniert wurden. In der Fig. 4 ist das Transportgut 40 exemplarisch als Transportbehälter veranschaulicht. Es versteht sich, dass das Transportgut 40 generell auch durch Pakete, Taschen oder andere, ähnliche Ladungsträger (mit und ohne Ladegut) realisiert werden kann.

Insbesondere veranschaulichen die FTF-Typen 10C und 10D die Möglichkeit, das hier vorgestellte Konzept im Bereich von sogenannten "High-Density-Storage"-(HDS-) Systemen einzusetzen, die z.B. unter der (eingetragenen) Marke "AutoSore" ^{™} kommerziell erhältlich sind. Die Fahrzeuge können in diesem Fall oben auf dem "Dach" eines regalartig ausgebildeten Behälterspeicherkubus positioniert und Verfahren werden, um turmartig übereinandergestapelte Behälter (vertikal und horizontal) umzusetzen. Auf dem Dach des entsprechenden Kubus können gitterartig ausgebildete Fahrschienen zur Zwangsführung der Fahrzeuge vorgesehen sein, die in Fig. 4 aber nicht gezeigt sind.

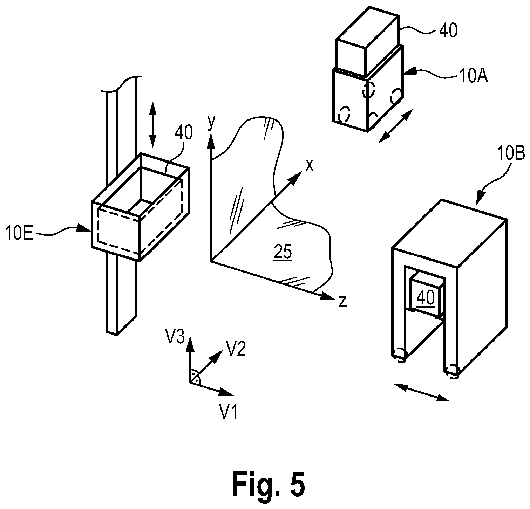

Fig. 5 visualisiert eine Kombination des bisher nur zweidimensional beschriebenen Konzepts, um auch die dritte Dimension (Höhenrichtung Y) hinsichtlich eines Materialflusses abdecken zu können. Die Fahrfläche 25 des bisher beschriebenen Konzepts erstreckt sich oben ausschließlich in der XZ-Ebene, die um die X-Achse oder Z-Achse um 90° gedreht werden kann, um anschließend in der XY-Ebene bzw. YZ-Ebene zu liegen. In der Fig. 5 ist neben der bisher beschriebenen Fahrfläche 25, die eine horizontal orientierte Bewegungsebene darstellt, eine zusätzliche Fahrfläche veranschaulicht, die in der XY-Ebene liegt und die eine vertikal orientierte Bewegungsebene für die Fahrzeuge darstellt.

Um die Fahrzeugbewegungen entlang der Höhenrichtung Y zu implementieren, kann ein weiterer FTF-Typ 10E benutzt werden, der z.B. Heber-artig ausgebildet ist, der sich (ausschließlich) in der Höhenrichtung Y bewegt und der eingerichtet ist, das Transportgut 40 mit dem FTF 10 z.B. gemäß dem Typ 10A auszutauschen, das sich wiederum (ausschließlich) in der Längsrichtung X bewegt. Dies bedeutet mit anderen Worten, dass, um alle drei Raumrichtungen X, Y und Z hinsichtlich eines Materialflusses abzudecken, zwei zweidimensionale Systeme gemäß dem vorliegenden Konzept miteinander fusioniert werden können. Das fusionierte System ist tensorartig ausgebildet und stellt eine dreidimensionale Anordnung bzw. 3D-Matrix aus Gitterpunkten 26 dar. Die Fahrzeuge des Heber-artigen Typs 10E definieren eine dritte Gruppe 54 von FTF 10, die ausschließlich entlang eines dritten Basisvektors V3 bewegt werden dürfen, der parallel zur Höhenrichtung Y orientiert ist. Der zweite und dritte Basisvektor V2 und V3 spannen die zusätzliche Fahrfläche auf, die der XY-Ebene entspricht. Die Basisvektoren sind vorzugsweise senkrecht zueinander orientiert.

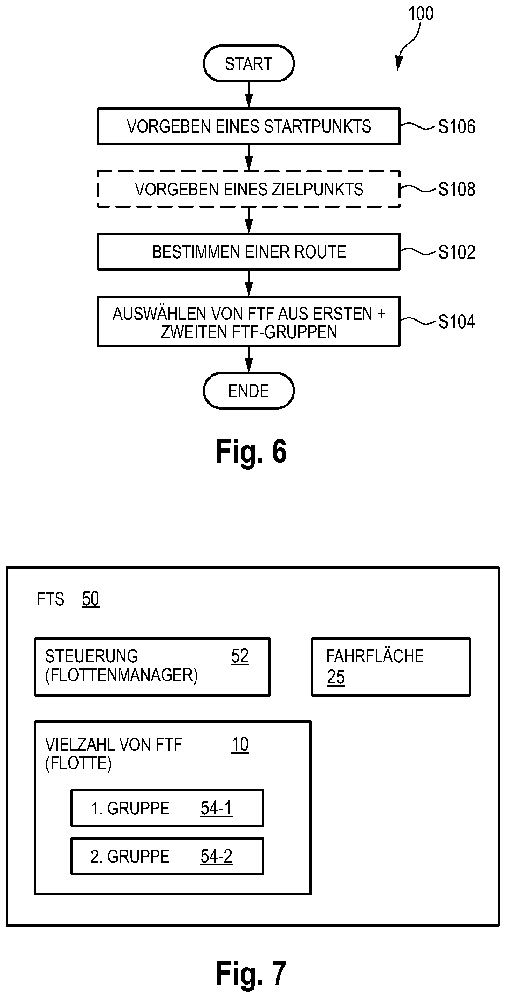

Fig. 6 veranschaulicht ein Flussdiagramm 100 zum Planen einer Route 28, insbesondere in der zweidimensionalen Fahrfläche 25 in der XZ-Ebene (vgl. Fig. 3 und 5). Beim Planen der Route 28 wird ein Fahrauftrag erzeugt, der mehrere Teilfahraufträge zur Implementierung durch eine Vielzahl der FTF 10 umfassen kann.

In einem Schritt S102 wird die Route 28 durch eine Steuerung 52 eines fahrerlosen Transportsystems (FTS) 50 bestimmt. Das FTF 50 wird unter gleichzeitiger Bezugnahme auf die Fig. 7 noch erläutert werden. Das FTS 50 umfasst eine Vielzahl (Flotte) der FTF 10, wie sie exemplarisch unter Bezugnahme auf Fig. 1 beschrieben sind. Die Vielzahl ist in mindestens eine erste Gruppe 54-1 und eine zweite Gruppe 54-2 unterteilt.

Danach werden in einem Schritt S104 geeignete FTF 10 aus den ersten und zweiten Gruppen 54-1 und 54-2 der FTF 10 ausgewählt, um ein Transportgut 40 von seinem vorgegebenen Startpunkt 32 zu seinem vorgegebenen Zielpunkt 32 zu transportieren, indem das Transportgut 40 zwischen ausgewählten FTF 10 übergeben wird (vgl. Fig. 3). Die FTF 10 der ersten Gruppe 54-1 dürfen sich nur entlang eines ersten Basisvektors V1 bewegen, wohingegen die FTF 10 der zweiten Gruppe 54-2 sich nur entlang eines zweiten Basisvektors V2 bewegen dürfen, der sich vom ersten Basisvektor V1 unterscheidet und der gemeinsam mit dem ersten Basisvektor V1 die (zweidimensionale) Fahrfläche 25 definiert, wie es oben bereits bei den Fig. 2 und 3 beschrieben wurde. Die Steuerung 52 wählt also ein oder mehrere der FTF 10 aus der ersten Gruppe 54-1, die sich z.B. nur in der Querrichtung Z bewegen, und ein oder mehrere FTF 10 aus der zweiten Gruppe 54-2, die sich nur in der Längsrichtung X bewegen, so aus, dass das Transportgut 40 - durch eine jeweilige Übergabe zwischen den ausgewählten FTF 10 - seinen Zielpunkt 32 erreicht.

Herkömmlicherweise wird ein einziges herkömmliches Fahrzeug ausgewählt, das sich in beiden Richtungen X und Z bewegen darf, um die gesamte Route 28 (ohne Übergabe des Transportguts 40) zu befahren. Gemäß dem vorliegenden Konzept wird die Gesamtroute 28 in viele Teilstrecken (Wegstrecken 34) mit entsprechenden Teilfahraufträgen unterteilt, die gemeinsam in einem zusammenhängenden Transportweg resultieren, der der Route

28 entspricht. Für die Unterteilung der Route 28 in die Teilstrecken gibt es viele verschiedene Lösungen, die die Steuerung 52, auch unter Berücksichtigung von (Verkehrs-) Parametern, gegeneinander abwägen kann, um ein optimales Ergebnis hinsichtlich eines Durchsatzes (Transporte/Zeiteinheit) zu erzielen. Diese Parameter können umfassen: eine FTF-spezifische Auslastung bzw. Verfügbarkeit; eine Verkehrsdichte; eine Priorität des Transportguts 40; und/oder Ähnliches.

Die Punkte 32 (Ziel) und 30 (Start) können der Steuerung 52 optional in einem oder mehreren Schritten S106 bzw. S108 von einer externen Entität, wie zum Beispiel von einem (nicht gezeigten) Materialflussrechner, durch eine entsprechende (Daten-) Übermittlung vorgegeben werden. Die vorgegebenen Punkte 30 und 32 zeichnen sich dadurch aus, dass sie nur durch eine Kombination der Basisvektoren V1 und V2 miteinander verbindbar sind. Dies bedeutet mit anderen Worten, dass die Punkte 30 und 32 nicht auf einer "Geraden" (vgl. Reihe 34 oder Spalte 36 in Fig. 3) liegen, die von einem einzigen der FTF 10 (der ersten Gruppe 54-1 oder der zweiten Gruppe 54-2) allein abgefahren werden könnte. In diesem Sinne muss ein Richtungswechsel stattfinden, was nur möglich ist, wenn das Transportgut 40 zwischen den FTF 10 der beiden Gruppen 54-1 und 54-2, wie oben beschrieben, übergeben wird. Die Route 28 stellt eine zusammenhängende, d.h. ununterbrochene, Verbindung zwischen den Punkten 30 und 32 dar.

Der Schritt S102 des Bestimmens der Route 28 und der Schritt S104 des Auswählens der FTF 10 aus den beiden Gruppen 54-1 und 54-2 können zusammenfallen, d.h. identisch sein. Indem die FTF 10 ausgewählt werden, wird die Route 28, von der anfangs nur die Start- und Zielpunkte 30 und 32 bekannt sind, insgesamt festgelegt.

Der Schritt S104 des Auswählens der FTF 10 kann aber nicht nur festlegen, welche der FTF 10 bei der Erledigung des entsprechenden Transportauftrags beteiligt sind. Im Schritt S104 können auch Zeitpunkte festgelegt werden, zu denen sich die ausgewählten FTF 10 zur Übergabe des Transportguts 40 an den entsprechenden Kreuzungspunkten, d.h. Gitterpunkten 26, treffen (sollen), was insbesondere im Fall einer trägheitsbasierten Übergabe wichtig ist. Ohne trägheitsbasierte Übergabe ist es aber auch möglich, dass eines der FTF 10 auf das andere der FTF 10 wartet, je nachdem welches der FTF 10, die das Transportgut miteinander austauschen sollen, früher am ausgewählten Kreuzungspunkt ankommt.

Die Steuerung 52 kann die Funktionalität einer herkömmlichen Leitsteuerung (Flottenmanager) aufweisen. Leitsteuerungen in herkömmlichen FTS sorgen dafür, dass jedes Fahrzeug zentral und automatisiert einen Fahrauftrag zugewiesen bekommt. Ein Fahrauftrag ist zumindest durch einen der Zielpunkte 32 innerhalb der Fahrfläche 25 definiert, wo das Transportgut abzugeben ist. Eine Zielvergabe erfolgt üblicherweise durch eine Fahrauftragsabwicklung (Disposition von Fahraufträgen), die in die Leitsteuerung integriert ist oder eigenständig implementiert sein kann. Der Fahrauftrag umfasst auch einen zugeordneten Startpunkt 30. Ein Fahrauftrag kann ferner alle navigationswesentlichen Kreuzungspunkte, d.h. Gitterpunkte 26, zwischen den Start- und Zielpunkten 30 und 32 umfassen, wobei eine Karte der Fahrfläche 25, d.h. die Anordnung der Gitterpunkte 26 einschließlich deren Positionen und Entfernungen, in der Leitsteuerung hinterlegt ist und wobei die Navigation bzw. Wegfindung zentral durch die Leitsteuerung erfolgt. Die Leitsteuerung bestimmt in diesem Fall (vorab und/oder dynamisch in Echtzeit) den Weg bzw. die Route 28 durch die Fahrfläche 25 hindurch, vom Start bis zum Ziel. Die Navigation bzw. Wegfindung erfolgt in diesem Fall zentral.

Optional kann die Karte (auch) in jedem der FTF 10 hinterlegt sein. Der gesamte Fahrauftrag, welcher der Route 28 vom Startpunkt 30 zum Zielpunkt 32 entspricht, kann sich in diesem Fall aus einer entsprechenden Vielzahl von FTF-spezifischen Fahrteilaufträgen zusammensetzen. Jeder FTF-spezifische Fahrauftrag umfasst im Wesentlichen zumindest den finalen Zielpunkt 32. Ferner kann das FTF 10 einen Kreuzungspunkt (Gitterpunkt 26) der Route 28 festlegen, der von dem entsprechenden FTF 10 erreichbar ist. Das FTF 10 darf den Kreuzungspunkt sowie seine Bewegung bis zu diesem Kreuzungspunkt frei bestimmen. Die Auswahl des Kreuzungspunkts legt fest, welches FTF 10 der anderen Gruppe das zugehörige Transportgut 40 abholen und aufnehmen muss. Die FTF 10 kommunizieren alle relevanten Informationen untereinander. Die Fahrzeuge verfügen in diesem Fall über eine entsprechende eigene "Intelligenz", d.h. jedes der Fahrzeuge ist mit einer entsprechenden Datenverarbeitungs- und Kommunikationseinrichtung (Mikrocontroller, Rechner, etc.) ausgestattet, vgl. Fig. 1. Die Navigation bzw. Wegfindung erfolgt in diesem Fall dezentral und insbesondere dynamisch. Die beteiligten FTF 10 stimmen sich untereinander ab, indem z.B. das FTF 10, das das Transportgut 40 aktuell trägt, den finalen Zielpunkt 32 an alle anderen, oder an zumindest die lokal benachbarten, FTF 10 überträgt. Diese FTF 10 können dann selbst entscheiden, ob sie frei (d.h. unbeladen) sind und ob ihre Fahrstrecke das Transportgut näher an dessen Zielpunkt 32 bringt. Die Wegfindung erfolgt also insbesondere dynamisch, d.h. in Echtzeit und zufällig, wobei Optimierungen (z.B. kürzeste Route, kürzeste Transportdauer, etc.) berücksichtigt werden können.

Unabhängig davon, ob die Navigation zentral oder dezentral erfolgt, kann jedes Fahrzeug über einen Kommunikationskanal nahezu kontinuierlich mit der Leitsteuerung und/oder den anderen Fahrzeugen (datentechnisch) in Verbindung stehen, um zumindest das Fahrziel sowie Anweisungen für die Regelung des Verkehrs der Fahrzeuge (Verkehrsregelung bzw. -kontrolle) untereinander auszutauschen. Zur Verkehrsregelung kann die Leitsteuerung spezifische Fahraufträge, die spezifischen Fahrzeugen zugewiesen sind, priorisieren. Dies bedeutet z.B., dass ein spezielles Fahrzeug immer Vorfahrt vor allen anderen Fahrzeugen haben kann. Erkennt die Leitsteuerung aus den aktuellen (Fahrzeug-) Daten (Position, Auftrag, Geschwindigkeit, etc.), dass eine Kollision, eine Verklemmung oder Stauung unmittelbar bevorsteht, kann die Leitsteuerung den Verkehr unter Berücksichtigung eventueller Priorisierungen so regeln, dass keine Kollision, Verklemmung oder Stauung stattfindet. Die Leitsteuerung kann zu diesem Zwecke z.B. über ein (Computer-) Netzwerk, z.B. WLAN, mit allen FTF 10 der Flotte kommunizieren.

Unter dem Begriff "Flotte" ist also allgemein die Vielzahl der FTF 10 zu verstehen. Ein einzelnes FTF 10 kann keine Flotte bilden. Die FTF 10 werden zu diesem Zweck vorab konfiguriert, d.h. jedes FTF 10 verfügt über eine individuelle Kennung. Die Leitsteuerung kann dann jedes FTF spezifisch ansprechen und verfolgen. Die Verfolgung betrifft sowohl den Fahrauftrag als auch eine (aktuelle) Position des Fahrzeugs in der Fahrfläche 25. Über die Position, die vom jeweiligen FTF 10 an die Leitsteuerung zurückgemeldet wird, kann die Verkehrskontrolle implementiert werden. Befinden sich zwei der FTF 10 z.B. auf einem Kollisionskurs, so interveniert die Leitsteuerung, indem z.B. eines der FTF 10 verzögert oder angehalten wird, um die sich anbahnende Kollision zu verhindern. Dies erfordert eine Positionsübermittelung für die FTF 10 in nahezu Echtzeit. Die herkömmliche Positionsbestimmung kann wiederum (zentral) in der Leitsteuerung und/oder (dezentral) in den FTF 10 selbst durchgeführt werden.

### Bezugszeichenliste

- 10: Fahrerloses Transportfahrzeug (FTF)
- 12: Antriebssystem des FTF
- 14: Energieversorgung des FTF
- 16: Navigationssystem des FTF
- 18: Steuerungs- und Kommunikationseinheit des FTF
- 20: Lastaufnahmemittel (LAM) des FTF
- 22: Sicherheitssystem des FTF
- 24: Gitterstruktur
- 25: Fahrfläche
- 26: Gitterpunkt
- 27: Wegpunkt
- 28: Route, Weg bzw. Navigationspfad
- 30: Startpunkt
- 32: Zielpunkt
- 34: Wegstrecke
- 36: Spalte
- 38: Reihe
- 40: Transportgut
- 50: FTS
- 52: Steuerung
- 54: Gruppen von FTF
- 10-1: erstes FTF in einem Übergabeprozess
- 10-2: zweites FTF in einem Übergabeprozess

## Patentansprüche

1. Fahrerloses Transportsystem, FTS, (50), das eingerichtet ist, eine Raster-Navigation durchzuführen, und das aufweist:
eine Vielzahl von fahrerlosen Transportfahrzeugen, FTF, (10), die für die Raster-Navigation eingerichtet sind, wobei die Vielzahl der FTF (10) mindestens durch erste und zweite Gruppen der FTF (10) gebildet ist;
eine Fahrfläche (25), innerhalb der sich die FTF (10) entlang einer Gitterstruktur (24) bewegen, die Gitterpunkte (26) aufweist und die durch erste und zweite Basisvektoren (V1, V2) aufgespannt ist, und wobei die FTF (10) der ersten Gruppe (54-1) nur entlang des ersten Basisvektors (V1) bewegt werden dürfen und wobei die FTF (10) der zweiten Gruppe (54-2) nur entlang des zweiten Basisvektors (V2) bewegt werden dürfen; und
eine Steuerung (18; 52), die eingerichtet ist, eine Route (28) entlang des Gitters (24) zwischen einem vorgegebenen Startpunkt (30) und einem vorgegebenen Zielpunkt (32) zu planen, so dass ausgewählte der FTF (10) ein Transportgut (40), durch dessen Übergabe zwischen den ausgewählten FTF (10), vom Startpunkt (30) zum Zielpunkt (32) transportieren.

2. FTS (50) nach Anspruch 1, wobei der Startpunkt (30) und der Zielpunkt (32) nur über eine Kombination aus den ersten und zweiten Basisvektoren (V1, V2) miteinander verbindbar sind, und insbesondere jeweils einem der Gitterpunkte (24) entsprechen.

3. FTS (50) nach Anspruch 1 oder 2, wobei die Route (28) so durch die Steuerung (18; 52) geplant ist, dass das Transportgut (40) zwischen den ausgewählten FTF (10) der ersten und zweiten Gruppen (54-1, 54-2) transferiert wird, wobei sich die ausgewählten FTF (10) in ausgewählten der Gitterpunkte (26) treffen, die von der Route (28) umfasst sind.

4. FTS (50) nach einem der Ansprüche 1 bis 3, wobei die Übergabe trägheitsbasiert erfolgt und die Steuerung (18; 52) ferner eingerichtet ist, die trägheitsbasierte Übergabe zu planen.

5. FTS (50) nach einem der Ansprüche 1 bis 4, wobei jedes der FTF (10) ein Lastaufnahmemittel, LAM, (20) mit einem aktiv angetriebenen Förderer aufweist, wobei die Übergabe des Transportguts (40) insbesondere aktiv angetrieben erfolgt.

6. FTS (50) nach einem der Ansprüche 1 bis 5, wobei die Gitterstruktur (24) durch Spalten (36) und Reihen (38) aus Wegstrecken (34) zwischen, insbesondere direkt, benachbarten der Gitterpunkte (26) gebildet ist, wobei die FTF (10) der ersten Gruppe (54-1) den Reihen (38) zugeordnet sind und die FTF (10) der zweiten Gruppe (54-2) den Spalten (36) zugeordnet sind.

7. FTS (50) nach Anspruch 6, wobei jede der Reihen (38) und jede der Spalten (36) mit jeweils einem einzigen der FTF (10) versehen ist.

8. FTS (50) nach einem der Ansprüche 1 bis 7, wobei:
die Fahrfläche (25) aus zwei Bewegungsebenen gebildet ist, wobei eine der Bewegungsebenen durch die ersten und zweiten Basisvektoren (V1, V2) aufgespannt ist und die andere Bewegungsebene durch einen dritten Basisvektor (V3) und einen der ersten und zweiten Basisvektoren (V1, V2) aufgespannt ist;
die Vielzahl der FTF (10) eine dritte Gruppe (54-3) der FTF (10) umfasst, wobei die FTF (10) der dritten Gruppe (54-3) nur entlang des dritten Basisvektors (V3) bewegt werden dürfen; und
die Basisvektoren (V1, V2, V3) vorzugsweise senkrecht zueinander orientiert sind.

9. Verfahren (100) zum Transportieren eines Transportguts (40) auf einer Route (28) in einem FTS (50), das eingerichtet ist, eine Raster-Navigation durchzuführen, und das eine Vielzahl von FTF (10) und eine Fahrfläche (25) aufweist, wobei die Vielzahl der FTF (10) mindestens durch erste und zweite Gruppen (54-1, 54-2) der FTF (10) gebildet ist, wobei jedes der FTF (10) für die Raster-Navigation eingerichtet ist und innerhalb und entlang einer der Raster-Navigation entsprechenden Gitterstruktur (24) bewegbar ist, die die Fahrfläche (25) definiert und die Gitterpunkte (26) aufweist, wobei die Fahrfläche (25) durch erste und zweite Basisvektoren (V1, V2) aufgespannt ist; wobei das Verfahren die Schritte aufweist:
Bestimmen (S102) der Route (28) entlang des Gitters (24) zwischen einem vorgegebenen Startpunkt (32) und einem vorgegebenen Zielpunkt (30); und
Auswählen (S104) von FTF (10) aus den ersten und zweiten Gruppen (54-1, 54-2), so dass die ausgewählten der FTF (10) ein Transportgut (40), durch dessen Übergabe zwischen den ausgewählten FTF (10), vom Startpunkt (32) zum Zielpunkt (20) transportieren;
wobei die FTF (10) der ersten Gruppe (54-1) nur entlang des ersten Basisvektors (V1) bewegt werden dürfen und wobei die FTF (10) der zweiten Gruppe (54-2) nur entlang des zweiten Basisvektors bewegt werden dürfen.

10. Verfahren nach Anspruch 9, das ferner aufweist:
Transportieren des Transportguts (40) entlang der Route (28), wobei das Transportgut (40) an entsprechenden Gitterpunkten (26) zwischen den ausgewählten FTF (10) übergeben wird.

11. Verfahren nach Anspruch 9 oder 10, wobei der Startpunkt (30) und der Zielpunkt (32) nur über eine Kombination aus den ersten und zweiten Basisvektoren (V1, V2) miteinander verbindbar sind, und insbesondere jeweils einem der Gitterpunkte (26) entsprechen.

12. Verfahren nach einem der Ansprüche 9 bis 11, wobei die Gitterstruktur (24) durch Spalten (36) und Reihen (38) aus Wegstrecken (34) zwischen benachbarten der Gitterpunkte (26) gebildet ist, wobei die FTF (10) der ersten Gruppe (54-1) den Reihen (38) zugeordnet sind und die FTF (10) der zweiten Gruppe (54-2) den Spalten (36) zugeordnet sind.

13. Verfahren (100) nach Anspruch 12, wobei jede der Reihen (38) und jede der Spalten (36) mit jeweils einem einzigen der FTF (10) versehen ist.

14. Verfahren nach einem der Ansprüche 9 bis 13, wobei:
die Fahrfläche (25) aus zwei Bewegungsebenen gebildet ist, wobei eine der Bewegungsebenen durch die ersten und zweiten Basisvektoren (V1, V2) aufgespannt ist und die andere Bewegungsebene durch einen dritten Basisvektor (V3) und einen der ersten und zweiten Basisvektoren (V1, V2) aufgespannt ist;
die Vielzahl der FTF (10) eine dritte Gruppe (54-3) der FTF (10) umfasst, wobei die FTF (10) der dritten Gruppe (54-3) nur entlang des dritten Basisvektors (V3) bewegt werden dürfen; und
die Basisvektoren (V1, V2, V3) vorzugsweise senkrecht zueinander orientiert sind.

15. Verfahren nach einem der Ansprüche 9 bis 14, wobei die Route (28) so durch die Steuerung (52) bestimmt ist, dass das Transportgut (28) zwischen den ausgewählten FTF (10) der Gruppen (54-1, 54-2, 54-3) transferiert wird, wobei sich die ausgewählten FTF (10) in ausgewählten der Gitterpunkte (26) treffen, die von der Route (28) umfasst sind.
